# EUROPÄISCHE PATENTSCHRIFT

(11) **EP 0 920 578 B1**
(45) Veröffentlichungstag und Bekanntmachung des Hinweises auf die Patenterteilung: **13.08.2003**
(21) Anmeldenummer: 97936662.2
(22) Anmeldetag: 26.07.1997
(51) Int. Cl.: F02C 1/00, F02C 3/36

(54) **IN-LINE GASVORWÄRMUNG**
IN-LINE GAS PRE-HEATING
PRECHAUFFAGE DU GAZ EN LIGNE

(30) Priorität: 21.08.1996 DE 19633674
(43) Veröffentlichungstag der Anmeldung: 09.06.1999
(73) Patentinhaber: EWE Aktiengesellschaft, 26122 Oldenburg (DE)
(72) Erfinder: REIMERT, Rainer, D-76131 Karlsruhe (DE)
(74) Vertreter: Siewers, Gescha, Dr.
(86) Internationale Anmeldenummer: EP9704074
(87) Internationale Veröffentlichungsnummer: WO98007970

(56) Entgegenhaltungen:
- EP-A- 0 566 285
- EP-A- 0 635 673
- WO-A-94/11626
- NL-A- 8 700 630

## Beschreibung

Die Erfindung betrifft ein Verfahren und eine Vorrichtung zur Konditionierung von Gas vor und nach der Hochruckentspannung.

Viele brennbare Gase lagern natürlich oder technisch bedingt unter hohem Druck. So steht beispielsweise das Erdgas, das aus unterirdischen Lagerstätten gefördert wird, genauso unter einem hohen Druck, wie Gase in unterirdischen Gasspeichern oder großen Druckbehältern. Gase, die von hohen auf niedrigen Druck entspannt werden, so beispielsweise bei Förderung, Ausspeicherung oder in einer Gasturbine, kühlen sich infolge der Ausdehnung stark ab. Dies bringt technisch einige Probleme mit sich, da beispielsweise Zuleitungen vereisen konnen, sich die physikalischen Eigenschaften der Gase ändern oder die Entzundlichkeit herabgesetzt wird. Um diesen technischen Nachteilen auszuweichen und die Abkühlung zu kompensieren, wird das Gas vor oder nach der Entspannung aufgewärmt Üblicherweise erfolgt diese Erwärmung allerdings vor der Entspannung, also bei hohem Druck des Gases.

Als konventionell ubliche Vorwarmeinheiten insbesondere bei Untergrundspeicheranlagen von Erdgas, finden hauptsächlich zwei verschiedene Systeme Anwendung: Gasvorwarmanlagen und Gasheater Üblicherweise lassen sich beide Anlagetypen in die drei Bestandteile Wärmeerzeugung, Wärmeaustauscher und Wärmeträgersystem aufteilen. Sie unterscheiden sich lediglich in der Ausfuhrungsform bzw. in der Art ihrer räumlichen Anordnung. Bei der Gasvorwarmaniage wird das unter Speicherdruck stehende Gas durch einen Wärmeaustauscher geleitet. Dort wird das Speichergas erhitzt und das entsprechende Trägermedium, beispielsweise ein Wasser/Glykolgemisch, im Gegenstrom paralleler Rohrleitungen abgekühlt. Das Warmeträgermedium wird dann in einem geschlossenen Kreislauf wieder erwärmt und erneut in den Wärmeaustauscher zurückgeführt. Die Regelung der Gastemperatur erfolgt meist über den Volumenstrom des Wärmeträgers durch den Wärmeaustauscher, wobei die Menge an Wärmeträgermedium sich nach der Absenkung der Gastemperatur nach der Entspannung richtet. Es ist aber auch möglich, die Gastemperatur über eine Regulierung des Volumenstroms des Speichergases zu kontrollieren. Der apparative Aufwand fur die Vorwarmanlage erstreckt sich neben den Bestandteilen Wärmeerzeugung, Wärmeaustauscher und Wärmeträgersystem daruber hinaus auch auf ein Kesselhaus für den Wärmeerzeuger und auf die Sicherheits- und Regeleinrichtung sowohl für die Kesseleinheit als auch für das Wärmeträgersystem. Die Wärmezufuhr kann durch Verbrennung von flüssigen oder gasförmigen Brennstoffen, elektrische Energie oder den Einsatz von Gaswärmepumpen erfolgen.

Gasheater sind Vorwarmeinrichtungen, in denen Wärmeerzeugung und Wärmeübertragung auf den durchströmenden Speichergasstrom in einem Schritt erfolgt. Die Heater sind liegende Behälter, die im unteren Teil mit Flammenrohren und im oberen Teil mit Rohrbündeln ausgerüstet sind, wobei die Zwischenräume mit Wärmeträgermedium gefüllt sind. Das Speichergas und das zur Erwärmung des Wasserbades benötigte Erdgas durchlaufen gegenläufig den Gasheater, wobei das Wärmetragermedium durch die Flammenrohre erwärmt wird. Hier erfolgt die Regelung der Gastemperatur direkt am Wärmeerzeuger durch Einstellung des Brennstoffstromes entsprechend des benötigten Wärmebedarfs. Erdgasheater werden im Gegensatz zu Vorwärmanlagen komplett im Freien aufgestellt und der apparative Aufwand erstreckt sich neben den schon genannten drei Bestandteilen auch auf Sicherheits- und Regeleinrichtungen sowohl für das Brenn- als auch das Speichergas.

Abweichend von den hier vorgestellten Grundkonzepten wurde in der WO 94/11626 von Kück et al. vorgeschlagen, das Gas vor der Expansion wie bei beiden vorgenannten Anlagen beschrieben, in einem Wärmeaustauscher zu erwärmen. Hier soll die Aufwärmung aber mit Hilfe des Abgases von kleinen Blockheizkraftwerken durchgeführt werden, wobei ein interner Gasverbrennungsmotor und ein Generator verwendet werden. Das Abgas des Verbrennungsmotors erhitzt das Speichergas in einem Wärmeaustauscher vor der Expansion. Durch das Blockheizkraftwerk entsteht durch Antrieb des Generators elektrische Energie, welche ins Netz eingespeist werden kann.

Das Patent EP 0 453 007 von Verweil ist eine ursprüngliche Variante des vorgenannten Systems. Auch hier wird ein interner Verbrennungsmotor, meist Gasmotor, verwendet, wobei hier neben Abgasen, auch die Abwärme des Motors und die zur Verbrennung notwendige Luft zur Erwärmung des Gases eingesetzt wird. Letztere wird vor Verwendung im Motor über Gegenstrom in einem Wärmeaustauscher abgekühlt. Es werden entsprechend mehrere Wärmeaustauscher eingesetzt, wobei vorgeschlagen wird, den einen vor und den anderen möglicherweise nach der Expansion des Speichergases einzusetzen. Auch hier treibt der Verbrennungsmotor einen Generator an, der elektrische Energie erzeugt.

Die US-Patentschrift US 125,168 von Norton et al. betrifft eine Anlage zur Erhitzung eines Flüssigkeitsstromes. Hier werden separate Gasströme von Erdgas und Luft kontrolliert komprimiert in eine Injektions- und Mischungszone unter Expansion des einen und Kompression des anderen Gases überführt, dann in eine Verbrennungsanlage geleitet und die Abgase über einen Wärmeaustauscher dazu benutzt, eine Flüssigkeit zu erhitzen. Dieses System kann auch zur Erwärmung von Speichergasen angewandt werden.

Alle vorbeschriebenen Methoden stimmen darin überein, daß sie den Gasstrom des Speichergases lediglich mittelbar durch Wärmeaustauscher bzw. Trägermedien erwärmen. Es wird grundsätzlich zunächst das Gas vor der Entspannung, also bei noch hohem Druck im Wärmeaustauscher aufgeheizt. Die vorgeschlagenen Vorrichtungen mit Verbrennungsanlagen sind nachteiligerweise genehmigungspflichtig und erfordern ein hohes Maß an Sicherheitstechnik. Die Energie wird entweder aus dem Verbrennungsgas oder aus einem mit Erdgas gefeuerten Gaskessel gewonnen. Der deutlichste Nachteil der beschriebenen Anlagen liegt jedoch in einem ökologischen Defizit, da keine der beschriebenen Anlagen die Verbrennungswärme des verfeuerten Heizwertes nach dem Stand der Technik zu 100% ausnutzen kann. Entsprechend niedrig ist der Wirkungsgrad der bisher verwendeten Anlagen, d.h. entsprechend hoch der Energieverbrauch der zur Erreichung des gewünschten Effektes notwendig ist.

Es bestand also noch ein Bedarf an einer Vorrichtung oder einem Verfahren, das auf eine genehmigungspflichtige Verbrennungsanlage verzichtet und aus umwelttechnischen Gründen eine hohe Ausnutzung der Verbrennungswärme der verbrauchten Energie erreicht. Entsprechend sollte die Anlage den Bedürfnissen einer ökologischen und ökonomischen Energieversorgung entsprechen.

Erfindungsgemäß wird nun vorgeschlagen, eine Vorrichtung gemäß Hauptanspruch zu verwenden.

Überraschenderweise hatte sich bei einer Reihe von Versuchen gezeigt, daß es möglich ist, kontrolliert einen Teil des Gasstrom eines unter hohen Druck stehenden brennbaren Gases in einem geschlossenen Behältnis zu verbrennen und damit das Gas kontinuierlich zu erwärmen.

Brennbares Gas entweicht unter hohem Druck einem Speicher. Es strömt durch eine Rohrleitung bis zu einer Stelle, an der Sauerstoff in reiner oder verdünnter Form zugegeben wird. Die Zugabe kann über einen Gasverteiler, der mit einer Zündvorrichtung und einer Flammenüberwachung verbunden ist, oder über einen Brenner erfolgen. Dort findet eine kontrollierte Verbrennung statt, wobei die Menge an Sauerstoff oder sauerstoffhaltigem Gases, das zugegeben werden muß, über eine Temperaturmessung kontrolliert wird. Bei der Aufheizung des Gases durch direkte Verbrennung in der Rohrleitung entsteht u.a. Wasser, das zum Teil flüssig vorliegen kann und das vor der Entspannung des Gases in einem Abscheider aufgefangen wird. Das aufgeheizte, mit Wasserdampf gesättigte Gas wird dann in einer zweckmäßigen Vorrichtung wie beispielsweise einem Drosselventil oder einer Gasturbine auf einen anderen niedrigeren Druck entspannt. Hier folgen der Temperatursensor und meist ein weiterer Abscheider, an die sich - wie nach dem Stand der Technik üblich - eine Trocknungsanlage, beispielsweise in der Form einer Glykolwäsche anschließt.

Es hat sich bei der vorliegenden Erfindung in einigen Fällen als vorteilhaft erwiesen, die Verbrennung mit reinem Sauerstoff oder einer beliebigen Mischung aus Sauerstoff und Luft statt mit reiner Luft durchzuführen. Um zu hohe Temperaturen zu vermeiden, kann die Verbrennung auch durch die Anwendung eines geeigneten Katalysators unterstützt werden.

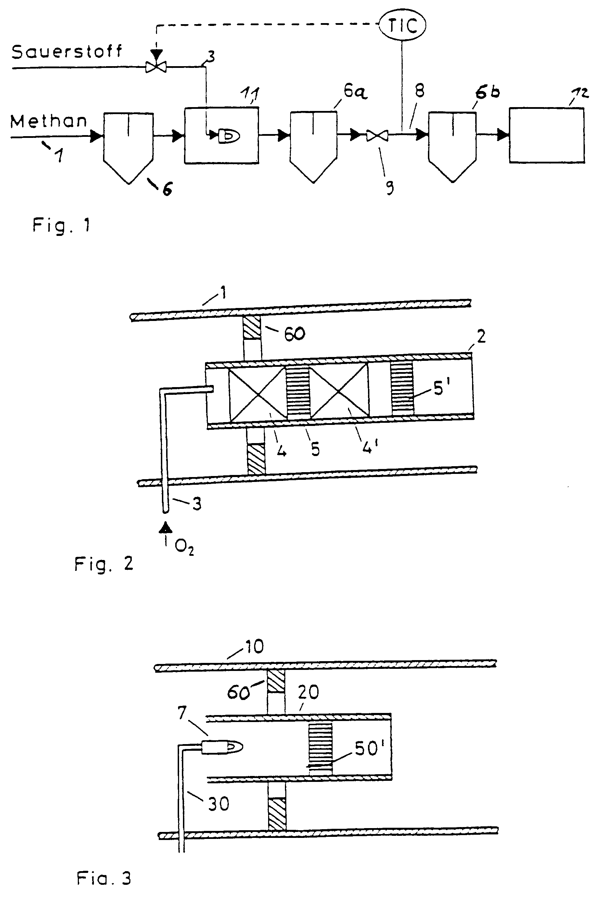

Das Verfahren wird nun anhand des vereinfachten Fließbildes in Abb. 1 (Fig. 1) beschrieben:

Brennbares Gas, hier als Methan bezeichnet, wird einem Speicher mit einem Druck von beispielsweise 180 bar entnommen. Evtl. enthaltene feste oder flüssige Begleitstoffe werden im Abscheider (6) abgeschieden. Das Gas hat je nach Speicherbedingungen meist eine Temperatur zwischen 10 und 30°C. In diesem Zustand erreicht das Gas die Stelle in der Rohrleitung, an der Sauerstoff in reiner oder verdünnter Form (3) zugegeben wird (11). Die Zugabe erfolgt entweder über einen Gasverteiler, der mit einer Zündvorrichtung und einer Flammenüberwachung und ggf. mit einem Oxidationskatalysator verbunden ist, oder über einen Brenner, bei dem gegenüber herkömmlichen Brennern die Strömungsführung von Erdgas und Sauerstoff enthaltenem Gas vertauscht sind. Die Menge an Sauerstoff, die zugegeben werden muß, wird über eine Temperaturmessung (8) kontrolliert. Die Temperaturmessung (8) befindet sich in der Rohrleitung (1) hinter der Stelle, an der die Entspannung (9) stattfindet, entweder vor oder hinter dem dritten Wasserabscheider (6b). Bei der Aufheizung des Gases durch direkte Verbrennung in der Rohrleitung entsteht u.a. Wasser, das zum Teil flüssig vorliegen kann und das vor der Entspannung des Gases in einem Abscheider (6a) abgeschieden wird. Das nun vorliegende aufgeheizte, mit Wasserdampf gesättigte Gas wird in einer zweckmäßigen Vorrichtung, wie beispielsweise einer Gasturbine, von beispielsweise 180°C auf einen anderen, niedrigeren Druck entspannt. An die Entspannung schließen sich in beliebiger Reihenfolge ein Temperaturmeßsensor (8) und ein weiterer Abscheider (6b) an, dem im allgemeinen eine Trocknungsanlage (12) folgt.

Das Verfahren wird mit folgendem Zahlenbeispiel noch weiter erläutert, wobei als brennbares Gas Erdgas angenommen wird:

Ein aus einem unterirdischen Speicher auszuspeicherndes Erdgas soll vor der Entspannung so weit erhitzt werden, daß die Temperatur des Erdgases nach der Entspannung auf 40 bar bei 5°C liegt.

### Ausgangsdaten

| | | |
|---|---|---|
| Ausspeichergas | Zusammensetzung | Methan, wasserges. |
| | Druck | 180 bar |
| | Temperatur | 20 °C |
| | Volumenstrom (CH₄) | 100.000 m³/h (i.N.) |
| Oxidationsmittel: | Zusammensetzung | Sauerstoff, 100 % |
| | Druck | 180 bar |
| | Temperatur | 20 °C |

Die thermodynamische Analyse zeigt nun, daß das Erdgas vor der Entspannung von 20°C auf 46°C aufgeheizt werden muß. Dafür müssen jedem kg Erdgas 0,0067 kg Sauerstoff zugegeben werden, der dann mit dem Erdgas zu H₂O und CO₂ reagiert. Bei anderen Bedingungen müßten entsprechend andere Temperaturen erreicht und spezifische Sauerstoffmengen zugegeben werden.

Die Erfindung wird nun anhand weiterer Zeichnungen und bevorzugter apparativer Ausführungen genauer beschrieben:
Abb. 2 (Fig. 2) zeigt eine Ausführungsform mit katalytisch geführter Verbrennung.
Abb. 3 (Fig. 3) zeigt eine Ausführungsform, bei der die Verbrennung des Gases in einem Brenner erfolgt.

Bei der Ausführung gemäß Fig. 2 wird ein Teil des Gases, meist Erdgases, das in der Rohrleitung (1) strömt, durch ein zentrales Rohr (2) geführt. Am Anfang des zentralen Rohres (2) wird Sauerstoff über eine weitere Rohrleitung (3) zugegeben. In einer Mischstrecke (4) werden Sauerstoff und Gas miteinander vermischt. Dazu kann die Mischstrecke (4) Einbauten enthalten, die den Mischvorgang unterstützen. Die Verbrennung des Gases findet am Katalysator (5) statt. Es kann zweckmäßig sein, den Teil (5) mit dem Katalysator so auszulegen, daß dort nicht alles Gas verbrannt bzw. das Gas nicht vollkommen verbrannt wird. In diesem Fall sollte sich eine weitere Mischstrecke anschließen, wie auch ein weiterer Katalysator. Dies ist in Fig. 2 mit den Teilen (4', 5') angedeutet. Um das Gas in ausreichendem Maße durch das zentrale Rohr (2) strömen zu lassen, das seiner Strömung durch die Einbauten (4, 5) einen erhöhten Widerstand entgegensetzt, wird in dem freien Querschnitt der Rohrleitung (1) in dem Bereich, in dem sich das zentrale Rohr (2) befindet, ein Strömungswiderstand (60) eingebaut, der im einfachsten Fall ein Blechring ist.

Bei der Ausführung gemäß Abb. 3 erfolgt die Verbrennung des Erdgases in einem Brenner (7). Der Brenner (7) ist in einem zentralen Rohr (20) eingesetzt, das sich im das Gas, meist Erdgas, transportierenden Rohr (10) befindet. Der Brenner (7) kann als reiner Diffusionsbrenner oder als Vormischbrenner ausgeführt werden. Im letzteren Fall erhält er hier nicht gezeigte, aber z.B. vom Bunsenbrenner her bekannte Vorrichtungen, die eine Vorvermischung von Gas und Sauerstoff erlauben. Ebenfalls nicht gezeigt sind hier Zünd- und Überwachungseinrichtungen, wie sie beim Brennerbetrieb üblich sind. Der Sauerstoff wird über eine Leitung (30) zugeführt. Um evtl. Unvollkommenheiten der Verbrennung zu korrigieren, kann es zweckmäßig sein, in dem zentralen Rohr (20) noch einen Verbrennungskatalysator (50') anzuordnen. Der Strömungswiderstand (60) dient dazu, das Gas in ausreichendem Strom durch das zentrale Rohr (20) strömen zu lassen.

## Patentansprüche

1. Vorrichtung zur Erwärmung von unter hohem Druck stehendem, brennbaren Gas vor der Entspannung, umfassend ein das Gas enthaltendes Behältnis (1), **dadurch gekennzeichnet, daß** ein Teil des Gases direkt in dem das Gas enthaltende Behältnis (1) nach oder an einer im Behältnis liegenden Zugabestelle (11) mit Hilfe eines sauerstoffhaltigen Gases verbrannt wird.

2. Vorrichtung nach Anspruch 1, **dadurch gekennzeichnet, daß** das Gas enthaltende Behältnis (1) eine Rohrleitung ist.

3. Vorrichtung nach Anspruch 1 oder 2, **dadurch gekennzeichnet, daß** das sauerstoffhaltige Gas Sauerstoff ist.

4. Vorrichtung nach Anspruch 1 bis 3, umfassend eine sauerstofführende Rohrleitung (3), eine brennbares Gas führende Rohrleitung (1) und eine in dieser liegende Zugabestelle (11), **dadurch gekennzeichnet, daß** Sauerstoff enthaltendes Gas über eine Rohrleitung (3) in eine andere das brennbare Gas führende Rohrleitung (1) eingeführt wird, daß die den Sauerstoff führende Rohrleitung (3) die Gas führende Rohrleitung (1) durchdringend angebracht ist, daß durch eine Kröpfung der Leitung (3) der Öffnungsquerschnitt an der Zugabestelle (11) senkrecht zur Strömungsrichtung der das Gas führenden Leitung (1) angebracht ist und daß das Sauerstoff enthaltende Gas mit dem brennbaren Gas vermischt und verbrannt wird.

5. Vorrichtung nach Anspruch 1 bis 4, **dadurch gekennzeichnet, daß** das unter hohem Druck stehende, brennbare Gas Erdgas ist.

6. Vorrichtung nach Anspruch 1 bis 5, **dadurch gekennzeichnet, daß** zur Verbrennung ein Katalysator (5, 50') vorgesehen ist.

7. Vorrichtung nach Anspruch 1 bis 6, **dadurch gekennzeichnet, daß** zur Trocknung des Gases und zur Abführung des bei der Verbrennung entstehenden Wassers Wasserabscheider (1, 6, 6a) sowohl vor als auch nach der Entspannung vorgesehen sind.

8. Vorrichtung nach Anspruch 1 bis 7, **dadurch gekennzeichnet, daß** zur Verbrennung ein Gasverteiler mit Zündvorrichtung und ggf. Katalysator (5) vorgesehen ist.

9. Vorrichtung nach Anspruch 1 bis 8, **dadurch gekennzeichnet, daß** zur Verbrennung ein Brenner vorgesehen ist, bei dem die Zuführung des brennbaren Gases und des sauerstoffhaltigen Gases vertauscht sind.

10. Vorrichtung nach Anspruch 1 bis 9, **dadurch gekennzeichnet, daß** ein Strömungswiderstand (60) in der Rohrleitung (1) angebracht ist.

11. Verfahren zur Erwärmung von unter hohem Druck stehendem, brennbaren Gas vor der Entspannung, **dadurch gekennzeichnet, daß** die Erwärmung durch Verbrennung eines Teils des Gases direkt in einem das Gas enthaltenden Behältnis (1) durchgeführt wird.

12. Verfahren nach Anspruch 11, **dadurch gekennzeichnet, daß** das Gas enthaltende Behältnis eine Rohrleitung (1) ist.

13. Verfahren nach Anspruch 11 oder 12, **dadurch gekennzeichnet, daß** die Verbrennung mit Hilfe eines sauerstoffhaitigen Gases durchgeführt wird.

14. Verfahren nach Anspruch 13, **dadurch gekennzeichnet, daß** das verwendete sauerstoffhaltige Gas reiner Sauerstoff ist.

15. Verfahren nach Anspruch 11 bis 14, **dadurch gekennzeichnet, daß** Sauerstoff oder Sauerstoff enthaltendes Gas über eine Rohrleitung (3) in eine andere das brennbare Gas führende Rohrleitung (1) eingeführt wird, daß das Sauerstoff enthaltende Gas mit einem anderen Gas vermischt (4) und die Mischung zur Reaktion gebracht wird.

16. Verfahren nach Anspruch 11 bis 15, **dadurch gekennzeichnet, daß** das unter hohem Druck stehende, brennbare Gas Erdgas ist.

17. Verfahren nach Anspruch 11 bis 16, **dadurch gekennzeichnet, daß** zur Verbrennung ein Katalysator (5, 50') verwendet wird.

18. Verfahren nach Anspruch 11 bis 17, **dadurch gekennzeichnet, daß** zur Trocknung des Gases und zur Abführung des bei der Verbrennung entstehenden Wassers Wasserabscheider (6, 6a, 6b) sowohl vor als auch nach der Entspannung eingesetzt werden.

19. Verfahren nach Anspruch 11 bis 18, **dadurch gekennzeichnet, daß** zur Verbrennung ein Gasverteiler mit Zündvorrichtung und ggf. Katalysator (5) verwendet wird.

20. Verfahren nach Anspruch 11 bis 19, **dadurch gekennzeichnet, daß** zur Verbrennung ein Brenner verwendet wird, bei dem die Zuführung des brennbaren Gases und des sauerstoffhaltigen Gases vertauscht sind.

21. Verfahren nach Anspruch 11 bis 20, **dadurch gekennzeichnet, daß** ein Strömungswiderstand (6) in der Rohrleitung (1) verwendet wird.

## Claims

1. A device for heating combustible gas - under high pressure - before the release of pressure, comprising a container (1) containing the gas, **characterized in that** part of the gas is burnt with the aid of a gas containing oxygen directly in the container (1) containing the gas downstream of or at a point of addition (11) situated in the container.

2. A device according to Claim 1, **characterized in that** the container (1) containing gas is a conduit.

3. A device according to Claim 1 or 2, **characterized in that** the gas containing oxygen is oxygen.

4. A device according to Claims 1 to 3, comprising a conduit (3) conveying oxygen, a conduit (1) conveying combustible gas, and a point of addition (11) situated in the said conduit (1), **characterized in that** gas containing oxygen is introduced by way of a conduit (3) into another conduit (1) conveying the combustible gas, the conduit (3) conveying the oxygen is attached so as to pass through the conduit (1) conveying gas, the opening cross-section is attached by a right-angle bend of the line (1) to the point of addition (11) at a right angle to the flow direction of the line (1) conveying the gas, and the gas containing oxygen is mixed with the combustible gas and burnt.

5. A device according to Claims 1 to 4, **characterized in that** the combustible gas under high pressure is natural gas.

6. A device according to Claims 1 to 5, **characterized in that** a catalyst (5, 50') is provided for the combustion.

7. A device according to Claims 1 to 6, **characterized in that** water separators (1, 6, 6a) are provided both before and after the release of pressure in order to dry the gas and to remove the water formed during the combustion.

8. A device according to Claims 1 to 7, **characterized in that** a gas distributor with an ignition device and optionally a catalyst (5) is provided for the combustion.

9. A device according to Claims 1 to 8, **characterized in that** a burner, in which the supply of the combustible gas and of the gas containing oxygen [is] exchanged, is provided for the combustion.

10. A device according to Claims 1 to 9, **characterized in that** a flow resistance means (60) is attached in the conduit (1).

11. A method of heating combustible gas - under high pressure - before the release of pressure, **characterized in that** the heating is carried out by burning part of the gas directly in a container (1) containing the gas.

12. A method according to Claim 11, **characterized in that** the container containing gas is a conduit (1).

13. A method according to Claim 11 or 12, **characterized in that** the combustion is carried out with the aid of a gas containing oxygen.

14. A method according to Claim 13, **characterized in that** the oxygen-containing gas used is pure oxygen.

15. A method according to Claims 11 to 14, **characterized in that** oxygen or gas containing oxygen is introduced by way of a conduit (3) into another conduit (1) conveying the combustible gas, the gas containing oxygen is mixed (4) with another gas and the mixture is caused to react.

16. A method according to Claims 11 to 15, **characterized in that** the combustible gas under high pressure is natural gas.

17. A method according to Claims 11 to 16, **characterized in that** a catalyst (5, 50') is used for the combustion.

18. A method according to Claims 11 to 17, **characterized in that** water separators (6, 6a, 6b) are used both before and after the release of pressure in order to dry the gas and to remove the water formed during the combustion.

19. A method according to Claims 11 to 18, **characterized in that** a gas distributor with an ignition device and optionally a catalyst (5) is used for the combustion.

20. A method according to Claims 11 to 19, **characterized in that** a burner, in which the supply of the combustible gas and of the gas containing oxygen [is] exchanged, is used for the combustion.

21. A method according to Claims 11 to 20, **characterized in that** a flow resistance means (6) is used in the conduit (1).

## Revendications

1. Dispositif pour le réchauffage de gaz combustible à haute pression avant la détente, comprenant un récipient (1) qui contient le gaz, **caractérisé en ce qu'**une partie du gaz est brûlée directement dans le récipient (1) contenant le gaz, après ou au niveau d'un point d'alimentation (11) situé dans le récipient, avec l'aide d'un gaz oxygéné.

2. Dispositif selon la revendication 1, **caractérisé en ce que** le récipient (1) contenant le gaz est une conduite.

3. Dispositif selon la revendication 1 ou 2, **caractérisé en ce que** le gaz oxygéné est de l'oxygène.

4. Dispositif selon les revendications 1 à 3, comprenant une conduite d'oxygène (3), une conduite de gaz combustible (1) et un point d'alimentation (11) disposé dans celle-ci, **caractérisé en ce que** le gaz oxygéné est introduit par l'intermédiaire d'une conduite (3) dans une autre conduite (1) transportant le gaz combustible, **en ce que** la conduite d'oxygène (3) pénètre dans la conduite de gaz combustible (1), **en ce que** grâce à un coude de la conduite (3), la section d'ouverture au point d'alimentation (11) est disposée perpendiculairement à la direction d'écoulement dans la conduite de gaz (1) et **en ce que** le gaz oxygéné est mélangé au gaz combustible et brûlé.

5. Dispositif selon les revendications 1 à 4, **caractérisé en ce que** le gaz combustible (1) à haute pression est du gaz naturel.

6. Dispositif selon les revendications 1 à 5, **caractérisé en ce qu'**il est prévu un catalyseur (5, 50') pour la combustion.

7. Dispositif selon les revendications 1 à 6, **caractérisé en ce qu'**il est prévu avant et après la détente, un séparateur d'eau (1, 6, 6a) pour le séchage du gaz et l'élimination de l'eau résultant de la combustion.

8. Dispositif selon les revendications 1 à 7, **caractérisé en ce qu'**il est prévu, pour la combustion, un distributeur avec dispositif d'allumage et le cas échéant catalyseur (5).

9. Dispositif selon les revendications 1 à 8, **caractérisé en ce qu'**il est prévu, pour la combustion, un brûleur dans lequel l'alimentation du gaz combustible et du gaz oxygéné sont permutées.

10. Dispositif selon les revendications 1 à 9, **caractérisé en ce qu'**une résistance à l'écoulement (60) est disposée dans la conduite (1).

11. Procédé de réchauffage d'un gaz combustible à haute pression, avant la détente, **caractérisé en ce que** le réchauffage est réalisé par combustion d'une partie dudit gaz directement dans le récipient (1) contenant le gaz.

12. Procédé selon la revendication 11, **caractérisé en ce que** le récipient contenant le gaz est une conduite (1).

13. Procédé selon la revendication 11 ou 12, **caractérisé en ce que** la combustion du gaz est réalisée avec l'aide d'un gaz oxygéné.

14. Procédé selon la revendication 13, **caractérisé en ce que** le gaz oxygéné utilisé est de l'oxygène pur.

15. Procédé selon la revendication 11 à 14, **caractérisé en ce que** l'oxygène ou le gaz oxygéné est introduit par l'intermédiaire d'une conduite (3) dans une conduite (1) de gaz combustible, **en ce que** le gaz oxygéné est mélangé (4) à un autre gaz et le mélange est mis en réaction.

16. Procédé selon la revendication 11 à 15, **caractérisé en ce que** le gaz combustible à haute pression est du gaz naturel.

17. Procédé selon la revendication 11 à 16, **caractérisé en ce qu'**on utilise, pour la combustion, un catalyseur (5, 50').

18. Procédé selon la revendication 11 à 17, **caractérisé en ce qu'**on utilise avant et après la détente, un séparateur d'eau (6, 6a, 6b) pour sécher le gaz et pour éliminer l'eau résultant de la combustion.

19. Procédé selon la revendication 11 à 18, **caractérisé en ce qu'**on utilise pour la combustion un distributeur avec dispositif d'allumage et le cas échéant catalyseur (5).

20. Procédé selon la revendication 11 à 19, **caractérisé en ce qu'**on utilise un brûleur dans lequel l'alimentation du gaz combustible et du gaz oxygéné sont permutées.

21. Procédé selon la revendication 11 à 20, **caractérisé en ce qu'**on utilise une résistance à l'écoulement (60) disposée dans la conduite (1).
